# EUROPÄISCHE PATENTSCHRIFT

(11) **EP 1 936 338 B1**
(45) Veröffentlichungstag und Bekanntmachung des Hinweises auf die Patenterteilung: **25.11.2009**
(21) Anmeldenummer: 06126340.6
(22) Anmeldetag: 18.12.2006
(51) Int. Cl.: G01J 3/36, G01J 3/12

(54) **Spektraler fotoelektrischer Messwandler mit optischem Ablenkelement**
Spectral photoelectric transducer with optical deflecting element
Transducteur spectral photoélectrique avec déflecteur optique

(43) Veröffentlichungstag der Anmeldung: 25.06.2008
(73) Patentinhaber: X-Rite Europe GmbH, 8105 Regensdorf (CH)
(72) Erfinder: Ehbets, Peter, 8046, Zürich (CH)
(74) Vertreter: Schwabe - Sandmair - Marx

(56) Entgegenhaltungen:
- DE-A1- 3 041 375
- JP-A- 6 235 660
- US-A- 4 081 215
- US-A- 5 043 571
- US-A- 5 144 498

## Beschreibung

Die Erfindung betrifft einen spektralen fotoelektrischen Messwandler gemäss dem Oberbegriff des unabhängigen Anspruchs 1.

Bekannte mit solchen Messwandlern ausgestattete Messsysteme sind z.B. die Geräte DTP70 der Firma X-rite und SpectroDens der Firma Techkon. Die Messwandler dieser Geräte verwenden eine Matrix-Anordnung von 4 x 4 Einzel-Photodetektoren. Vor jedem Photodetektor ist ein entsprechender Bandpassfilter positioniert. Die Zwischenräume zwischen den Filtern sind mit schwarzer (opaker) Masse gefüllt, um eine optische Isolation für die Streulichtreduzierung zu erzielen.

Spektrale Messwandler der gattungsgemässen Art sind für eine Vielzahl von Anwendungen interessant. Im Bereich der Farbmesstechnik werden sie zum Beispiel als Einbausensoren für Drucker verwendet, wo sie eine automatische Farbkontrolle des Druckprozesses ermöglichen.

Die allgemeinen Anforderungen an solche Messwandler sind kompakte Bauweise und sehr geringe Herstellungskosten in grossen Stückzahlen.

Die mit einem solchen Messwandler ausgestatteten Messsysteme müssen im allgemeinen eine hohe absolute Farbmessgenauigkeit ohne Medienabhängigkeiten ermöglichen. Diese messtechnische Anforderung entspricht einer spektralen Auflösung von mehr als 10 verschiedenen Wellenlängenbereichen (Filterkanälen) im sichtbaren Messbereich zwischen 420 nm und 680 nm. Die Filterkanäle müssen deshalb eine Bandpassfunktion mit einer Halbwertsbreite von 20 bis 25 nm haben und den sichtbaren Messbereich kontinuierlich, ohne Unterbrüche, bewerten.

Die Realisierung von mehr als 10 Messkanälen mit entsprechenden physikalischen Bandpassfiltern ist ein Kostentreiber für das Messsystem.

Die US-4,081,215 beschreibt ein Spektrometer, das ein Simultane Messung der Intensität von Licht in zwei oder mehr spektralen Kanälen unter Verwendung eines einzelnen Interferenzfilters durchführt. Die US-5,144,498 zeigt einen Lichtfilter für variable Wellenlängen.

Durch die vorliegende Erfindung soll nun ein spektraler Messwandler der gattungsgemässen Art dahingehend verbessert werden, dass er auch bei hoher spektraler Auflösung vergleichsweise kostengünstig herstellbar ist.

Die Lösung dieser der Erfindung zugrundeliegenden Aufgabe ergibt sich aus den im kennzeichnenden Teil des unabhängigen Anspruchs 1 beschriebenen Merkmalen. Besonders vorteilhafte Ausgestaltungen und Weiterbildungen sind Gegenstand der abhängigen Ansprüche.

Die Grundidee der Erfindung besteht darin, zwei oder mehrere gleiche Sätze von wenigen unterschiedlichen schmalbandigen Filtern einzusetzen und durch (kostengünstigere) andere optische Massnahmen dafür zu sorgen, dass effektiv ein Zwei- oder Mehrfaches von unterschiedlichen Filterkanälen erreicht wird. Dieses erfindungsgemässe Konzept erlaubt mehr Filterkanäle für höhere Messgenauigkeit bei gleichzeitiger Kostenreduzierung, weil die Reduzierung der Anzahl physikalischer Filter den Produktionsprozess vereinfacht und die Produktionsausbeute erhöht.

Im Folgenden wird die Erfindung anhand der Zeichnung näher erläutert. Es zeigen:
- Fig. 1: eine explodierte Darstellung eines ersten Ausführungsbeispiels des erfindungsgemässen Messwandlers,
- Fig. 1a: ein Detail aus Fig. 1 in um 180° gedrehter Ansicht,
- Fig. 2: eine Seitenansicht des Messwandlers der Fig. 1,
- Fig. 3a-c: beispielsweise Filterspektren,
- Fig. 4-6: Ansichten analog Fig. 2 von drei weiteren Ausführungsbeispielen des erfindungsgemässen Messwandlers,
- Fig. 7: ein Filterspektrum des Ausführungsbeispiels der Fig. 6 und
- Fig. 8: eine perspektivische Ansicht eines Details eines weiteren Ausführungsbeispiels des erfindungsgemässen Messwandlers.

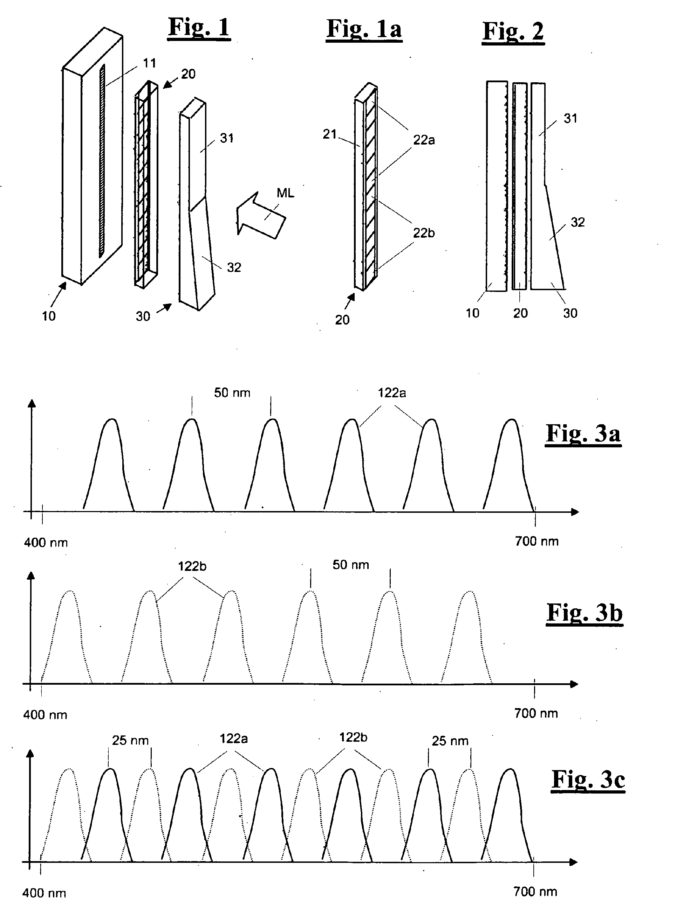

Der prinzipielle Aufbau des erfindungsgemässen Messwandlers ist am besten aus der explodierten Darstellung der Fig. 1 erkennbar. Der Messwandler umfasst ein im Folgenden als Detektor-Feld bezeichnetes lineares Feld 10 von fotoelektrischen Wandlerelementen, eine Filteranordnung 20 und ein optisches Ablenkelement 30. Die genannten drei Bauteile 10-30 sind, wie die Fig. 2 zeigt, unmittelbar aneinander oder in geringem Abstand zu einander montiert und gegenseitig örtlich fixiert. Die Filteranordnung kann z.B. auf das Detektor-Feld geklebt oder mit Abstandshaltern in kurzer Distanz zur aktiven Detektorfläche montiert sein.

Zu wandelndes Messlicht (Pfeil ML) gelangt durch das Ablenkelement 30 und die Filteranordnung 20 auf die im Bereich eines Detektorfensters 11 angeordneten Wandlerelemente des Detektor-Felds 10 und wird von den Wandlerelementen in entsprechende elektrische Messsignale umgewandelt.

Das Detektor-Feld 10 ist ein handelsübliches integriertes Bauteil, wie es von verschiedenen Herstellern wie z.B. Taos oder Hamamatsu hergestellt wird. Die von den einzelnen Wandlerelementen des Detektor-Felds erzeugten elektrischen Messsignale werden über einen im Bauteil integrierten Multiplexer und eine ebenfalls im Bauteil integrierte Ausleseelektronik ausgelesen und zur weiteren Verwendung an nicht dargestellten elektrischen Anschlüssen zur Verfügung gestellt.

Die Filteranordnung 20 besteht aus einem transparenten Filterträger 21, auf dem detektorseitig zwei Gruppen von hier z.B. je 6 Bandpassfiltern 22a bzw. 22b aufgebracht sind. Der besseren Erkennbarkeit halber ist die Filteranordnung 20 in Fig. 1a gegenüber der tatsächlichen Einbaulage um 180° gedreht dargestellt. Die Bandpassfilter innerhalb jeder Gruppe sind bezüglich ihres Durchlassbereichs unterschiedlich, die Filter in den beiden Gruppen sind jedoch gleich. Jeder Filter ist also zweimal vorhanden. Die Grösse der mit den Bandpassfiltern beschichteten Fläche des gemeinsamen Filterträgers 21 entspricht der aktiven Fläche des Detektor-Felds 10.

Die Bandpassfilter 22a bzw. 22b sind als dielektrische Interferenzfilter ausgebildet und in an sich bekannter Weise lithographisch in Dünnschichtbeschichtungstechnik auf dem gemeinsamen Filterträger 21 hergestellt. Diese Technologie bzw. dieses Herstellungsverfahren ermöglicht mit tragbarem Aufwand die Realisierung von 5 bis 6 verschiedenen Filterfunktionen (Durchlasskurven) auf einem gemeinsamen Träger. Auch die Kombination mit absorbierenden oder reflektierenden Masken, welche ein Übersprechen reduzieren können, ist mit dieser Technologie möglich.

Die einzelnen Bandpassfilter 22a bzw. 22b sind gemäss einem wichtigen Aspekt der Erfindung nicht kontinuierlich über den kompletten Messbereich (400-700 nm) ausgelegt, sondern so, dass ihre Durchlasskurven zwischen sich bzw. jeweils auf der kurzwelligen Seite eine Zone ohne Filterfunktion, also eine Transmissionslücke freihalten. In der Fig. 3a ist dies verdeutlicht. Sie zeigt die mit 122a bezeichneten nominellen Durchlasskurven der sechs Filter 22a bzw.der sechs Filter 22b. Die Durchlasskurven liegen ungefähr gleichmässig über den sichtbaren Spektralbereich von 400-700 nm verteilt mit einem gegenseitigen Abstand von ca. 50 nm und einer Halbwertsbreite von je ca. 20-25 nm. Unter nominellen Durchlasskurven werden diejenigen Kurven verstanden, die sich bei senkrechtem Lichteinfall (Einfallswinkel 0°) ergeben.

Die Breiten der zwischen den bzw. auf der kurzwelligen Seite der Durchlasskurven 122a befindlichen Zonen ohne Filterfunktion (Transmissionslücken) entsprechen (beim hier der gezeigten Ausführungsbeispiel) im Wesentlichen den Halbwertsbreiten der Filterdurchlasskurven 122a.

Dielektrische Interferenzfilter weisen eine ausgeprägte Abhängigkeit vom Lichteinfallswinkel auf. Ihre Durchlasskurven bzw. die effektiven Zentrumswellenlängen derselben verschieben sich mit zunehmendem Einfallswinkel (bezogen auf die Normale zur Filterebene) nach kürzeren Wellenlängen hin. Dieses Verhalten ist zum Beispiel in G. Schröder, Bauelemente der Optik, Taschenbuch der technischen Optik, Hanser Verlag, Kapitel 6.11 beschrieben. In der Fig. 3b sind die mit 122b bezeichneten effektiven Durchlasskurven der sechs Bandpassfilter 22a bzw. 22b für einen Lichteinfallswinkel von ca. 30° dargestellt. Wie man erkennt, liegen die Durchlasskurven 122b in den in Fig. 3a dargestellten Transmissionslücken.

Die Erfindung macht sich genau dieses einfallswinkelabhängige Verhalten von dielektrischen Interferenzfiltern zu Nutze, indem gemäss einem Hauptgedanken der Erfindung die beiden Gruppen von Bandpassfiltern 22a und 22b unter verschiedenen Einfallswinkeln mit Messlicht beaufschlagt werden. Die beiden verschiedenen Einfallswinkel werden durch das optische Ablenkelement 30 erzeugt, welches in kurzer Distanz vor der Filteranordnung 20 montiert ist. Dieses (aus Kostengründen) aus transparentem Kunststoff bestehende Ablenkelement 30 weist einen planparallelen Abschnitt 31 und einen prismatischen Abschnitt 32 auf. Der planparallele Abschnitt 31 liegt der Gruppe von Filtern 22a gegenüber, der prismatische Abschnitt 32 der Gruppe von Filtern 22b. Im planparallen Abschnitt 31 erfährt das Messlicht keine Ablenkung, die Filter 22a werden also unter einem Einfallswinkel von 0° mit Messlicht beaufschlagt. Der prismatische Abschnitt 32 lenkt das Messlicht entsprechend seinem Prismenwinkel (und seiner Brechungseigenschaften) um, so dass die Filter 22b unter einem entsprechend von 0° abweichenden mittleren Einfallswinkel beleuchtet werden und sich ihre effektiven Durchlasskurven wie in Fig. 3b dargestellt in Richtung kürzerer Wellenlängen verschieben. Bei geeigneter Bemessung des Prismenwinkels ergibt sich ein Einfallswinkel, der eine Verschiebung der Durchlasskurven der Filter 22b in die Mitte der Transmissionslücken der Filter 22a bewirkt. Für eine Verschiebung der Spitzenwellenlänge um 20 nm bis 25 nm wird erfahrungsgemäss eine Winkeländerung im Bereich von 25° bis 30° benötigt (siehe z.B. Hecht "Optics", Seiten 163 ff). Beim gezeigten Ausführungsbeispiel beträgt die erforderliche Verschiebung ca. 25 nm, was durch eine Änderung des Einfallswinkels um ca. 30° erreichbar ist. Bei den für optische Bauteile üblichen Kunststoffmaterialien ist für diese Einfallswinkeländerung ein Prismenwinkel von ca. 40° erforderlich.

In der Fig. 3c sind die effektiven Durchlasskurven 122a und 122b der Filter 22a und 22b in Kombination dargestellt. Wie man erkennt, wird durch nur sechs körperlich unterschiedliche Bandpassfilter, die je doppelt vorhanden sind, aber mit unterschiedlichen Einfallswinkeln beleuchtet werden, eine spektrale Auflösung von 12 Wellenlängenbereichen erreicht.

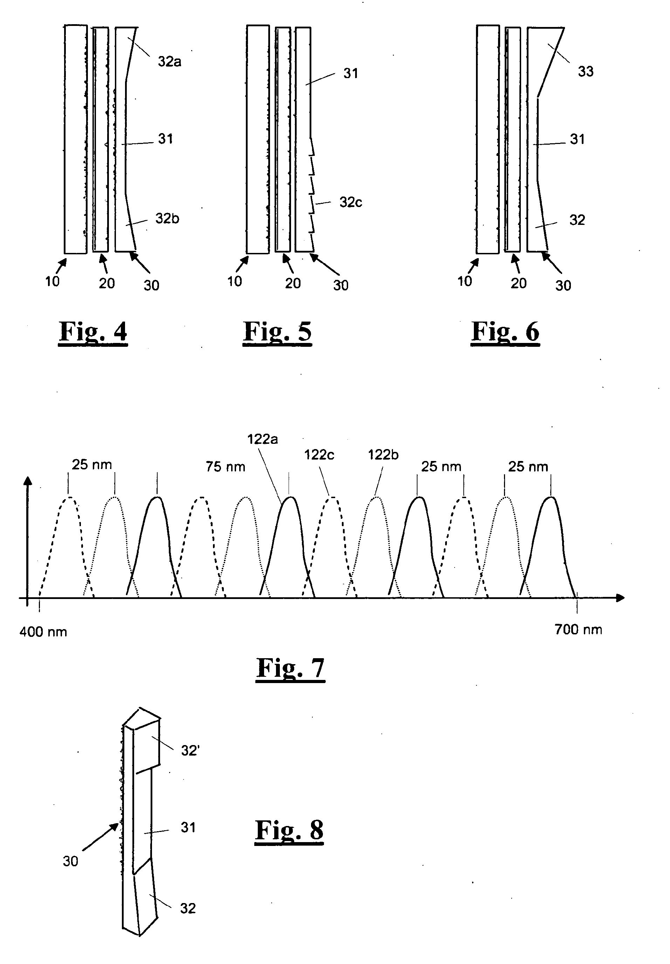

Die zu ein und derselben Gruppe gehörenden Filter müssen nicht in einem zusammenhängenden Bereich angeordnet sein, sondern können im Prinzip willkürlich über den Filterträger verteilt sein, sofern nur das optische Ablenkelement entsprechend angepasst ist. Dies sei anhand des in der Fig. 4 skizzierten Ausführungsbeispiels verdeutlicht. Hier sind die Filter der einen Gruppe in einer Mittenzone des Filterträgers 21 angeordnet, während die Filter der anderen Gruppe auf zwei Randzonen des Filterträgers aufgeteilt sind. Dementsprechend weist das optische Ablenkelement 30 einen mittleren planparallelen Abschnitt 31 und zwei äussere prismatische Abschnitte 32a und 32b mit gleichem Prismenwinkel auf. Umgekehrt könnten auch der mittlere Abschnitt prismatisch und die beiden äusseren Abschnitte planparallel ausgebildet sein. Durch sinnvolle Anordnung und Aufteilung der Filtergruppen kann erreicht werden, dass die Höhe der prismatischen Abschnitte des Ablenkelements klein gehalten wird.

Wie aus dem in Fig. 5 dargestellten Ausführungsbeispiel hervorgeht, kann die Bautiefe des optischen Ablenkelements 30 auch dadurch begrenzt werden, dass sein prismatischer Abschnitt 32c als Fresnel-Struktur ausgebildet ist.

Die prismatische Struktur kann auch auf beide Seitenflächen des optischen Ablenkelements verteilt werden.

Das erfindungsgemässe Prinzip der gezielten Ausnutzung der Einfallswinkelabhängigkeit der Interferenzfilter lässt sich verallgemeinern. Die Bandpassfilter können so ausgelegt werden, dass die Zentrumsabstände ihrer (nominellen) Durchlasskurven ein ganzzahliges Vielfaches N der gewünschten spektralen Auflösung des Messwandlers betragen. Unter spektraler Auflösung wird dabei der spektrale Abstand zwischen benachbarten Filterkanälen verstanden. Jedes Bandpassfilter muss dann genau N mal vorhanden sein, das heisst, die Gesamtheit aller Bandpassfilter auf dem Filterträger ist in N Gruppen unterteilt, die jeweils die gleichen Filter enthalten. Entsprechend ist das optische Ablenkelement in N Zonen unterteilt, wobei jede Zone einer der N Filtergruppen zugeordnet ist und das Messlicht um einen anderen definierten Winkel umlenkt, so dass die Filter jeder Gruppe mit einem entsprechenden anderen mittleren Einfallswinkel beaufschlagt werden. Die Umlenkwinkel und die zugehörigen Einfallswinkel werden so bemessen, dass die effektiven Durchlasskurven der mit von 0° verschiedenen Einfallswinkeln beaufschlagten Filter ungefähr gleichabständig in die Transmissionslücken der unter 0° beaufschlagten Filter zu liegen kommen.

Noch allgemeiner ausgedrückt liegt die Erfindung in der Idee, die effektiven Durchlasskurven der Bandpassfilter aller Filtergruppen ausser einer durch geeignete optische Mittel (im Konkreten das Ablenkelement 30) spektral so verschieben, dass die effektiven Durchlasskurven aller Bandpassfilter verschiedene spektrale Lagen (Mitten- oder Spitzenwellenlängen) aufweisen und sich somit eine Vervielfachung der effektiven Filterkanäle ergibt.

Die Figuren 6 und 7 verdeutlichen diese Verallgemeinerung anhand eines Ausführungsbeispiels, bei dem die Filteranordnung 20 drei Gruppen zu je vier verschiedenen Bandpassfiltern im Abstand von ca. 75 nm und mit Halbwertsbreiten von ca. 25 nm aufweist und das optische Ablenkelement 30 entsprechend mit drei Abschnitten 31, 32 und 33 ausgestattet ist, die je einer der drei Filtergruppen zugeordnet sind. Der Abschnitt 31 ist wiederum planparallel und lenkt das Messlicht nicht um. Die beiden anderen Abschnitte 32 und 33 sind prismatisch mit unterschiedlichen Prismenwinkeln ausgebildet und lenken das Messlicht daher um zwei verschiedene Winkel um. Die beiden Prismenwinkel und die sich daraus ergebenden beiden Umlenkwinkel des Messlichts sind so gewählt, dass sich die in Fig. 7 mit 122b bezeichneten effektiven Durchlasskurven der dem Abschnitt 32 zugeordneten Bandpassfilter um ca. 25 nm und die mit 122c bezeichneten effektiven Durchlasskurven der dem Abschnitt 33 zugeordneten Bandpassfilter um ca. 50 nm verschieben und somit gleichabständig in den Transmissionslücken der mit 122a bezeichneten Durchlasskurven der dem Abschnitt 31 des Ablenkelements 30 zugeordneten Bandpassfilter zu liegen kommen.

In den vorstehenden Ausführungsbeispielen ist jeweils ein lineares Detektor-Feld 10 eingesetzt. Es versteht sich jedoch, dass auch ein zweidimensionales Detektor-Feld zum Einsatz kommen kann, wobei dann die Anordnung der Bandpassfilter und der Abschnitte des optischen Ablenkelements entsprechend zweidimensional getroffen werden muss.

Interferenzfilter haben die Eigenschaft, dass bei nicht senkrechtem Lichteinfall Polarisationsabhängigkeiten entstehen können. Diese können durch ein entsprechend angepasstes Filterdesign reduziert werden. Gemäss einem weiteren Aspekt der Erfindung erfolgt diese Reduzierung von Polarisationseinflüssen jedoch dadurch, dass das Ablenkelement pro Umlenkwinkel mit zwei prismatischen Abschnitten ausgebildet ist, welche das Messlicht jeweils um denselben Winkelbetrag, aber in zwei zu einander orthogonale Raumrichtungen umlenken. Entsprechend umfasst die Filteranordnung 20 pro Einfallswinkel zwei Gruppen mit jeweils den gleichen Bandpassfiltern. Die Filter der beiden Gruppen sind jeweils einem der beiden prismatischen Abschnitte zugeordnet. Dadurch entstehen für die unter einem von 0° abweichenden Einfallswinkel beaufschlagten Filter jeweils zwei spektral gleiche aber räumlich orthogonale Filterkanäle. Durch Summation der Signale jeweils der orthogonalen Filterkanäle wird die Polarisationsabhängigkeit reduziert. Zur Kompensation unterschiedlicher Wirkungsgrade der orthogonalen Filterkanäle kann die Summation entsprechend gewichtet durchgeführt werden.

Die Fig. 8 zeigt ein gemäss Vorstehendem ausgebildetes Ablenkelement 30, welches aus drei gleich langen Abschnitten besteht. Der mittlere Abschnitt 31 ist planparallel ausgebildet und die beiden äusseren prismatischen Abschnitte 32 und 32' weisen eine prismatische Form auf. Die Prismenwinkel der beiden Abschnitte 32 und 32' sind gleich gross, aber bezüglich der optischen Achse (Normalen auf den mittleren Abschnitt 31) gegenseitig um 90° versetzt, also orthogonal.

## Patentansprüche

1. Spektraler fotoelektrischer Messwandler mit einem Feld (10) von fotoelektrischen Wandlerelementen und diesen vorgeschalteten, auf einem gemeinsamen Filterträger (21) angeordneten dielektrischen Interferenz-Bandpassfiltem (22) zur Sensibilisierung der Wandlerelemente auf unterschiedliche Wellenlängenbereiche des Messlichts (ML), **dadurch gekennzeichnet, dass** die Bandpassfilter (22) in eine Anzahl von Filtergruppen (22a, 22b) eingeteilt sind, die jeweils die gleichen, innerhalb der Filtergruppe (22a, 22b) unterschiedlichen Bandpassfilter (22) enthalten, dass optische Mittel (30) vorhanden sind, welche die effektiven Durchlasskurven (122b) der Bandpassfilter (22) aller Filtergruppen (22a, 22b) ausser einer Filtergruppe (22a, 22b) spektral so verschieben, dass die effektiven Durchlasskurven (122a, 122b) aller Bandpassfilter (22) verschiedene spektrale Lagen aufweisen,
wobei die Halbwertsbreiten und spektralen Abstände der Durchlasskurven (122) der Bandpassfilter (22) jeder Filtergruppe (22a, 22b) so ausgelegt sind, dass zwischen den Durchlasskurven (122) Transmissionslücken verbleiben,
wobei die optischen Mittel (30) ein den Bandpassfiltern (22) vorgeschaltetes optisch transparentes optisches Ablenkelement (30) mit einer der Anzahl Filtergruppen (22a, 22b) entsprechenden Anzahl von Abschnitten (31,32) umfassen, wobei jeder Abschnitt (31,32) des Ablenkelements (30) den Bandpassfiltern einer der Filtergruppen (22a, 22b) zugeordnet ist und das Messlicht (ML) um einen anderen Umlenkwinkel umlenkt, und
wobei die Abschnitte (31,32) einen planparallelen Abschnitt (31) und wenigstens einen prismatischen Abschnitt (32) oder eine entsprechende prismatische Fresnel-Struktur (32c) umfassen.

2. Messwandler nach Anspruch 1, **dadurch gekennzeichnet, dass** die Breiten der Transmissionslücken im Wesentlichen einem der Anzahl Filtergruppen (22a, 22b) entsprechenden Vielfachen der angestrebten spektralen Auflösung entsprechen.

3. Messwandler nach Anspruch 2, **dadurch gekennzeichnet, dass** die Umlenkwinkel des Ablenkelements (30) so gewählt sind, dass die effektiven Durchlasskurven (122) der Bandpassfilter (22) im Wesentlichen gleichabständig in die Transmissionslücken verschoben werden.

4. Messwandler nach Anspruch 2 oder 3, **dadurch gekennzeichnet, dass** das optische Ablenkelement (30) unmittelbar oder in geringem Abstand am Filterträger (21) angeordnet ist.

5. Messwandler nach einem der Ansprüche 2 bis 4, **dadurch gekennzeichnet, dass** das optische Ablenkelement (30) pro Umlenkwinkel zwei prismatische Abschnitte (32, 32') aufweist, welche das Messlicht (ML) um denselben Winkelbetrag in zwei zu einander orthogonale Raumrichtungen umlenken.

6. Messwandler nach einem der Ansprüche 2 bis 5, **dadurch gekennzeichnet, dass** das optische Ablenkelement (30) aus optisch transparentem Kunststoff besteht.

7. Messwandler nach einem der vorangehenden Ansprüche, **dadurch gekennzeichnet, dass** die dielektrischen Interferenz-Bandpassfilter (22) lithographisch in Dünnschichtbeschichtungstechnik auf dem Filterträger (21) aufgebracht sind.

## Claims

1. A spectral photoelectric transducer, having an array (10) of photoelectric transducer elements and dielectric interference bandpass filters (22), connected upstream therefrom and disposed on a common filter support (21), for sensitising the transducer elements to different wavelength ranges of the measurement light (ML),
**characterised in that** the bandpass filters (22) are divided into a number of filter groups (22a, 22b), each of which respectively contains the same bandpass filters (22) that are different within the filter group (22a, 22b),
**in that** optical means (30) are provided, which spectrally shift the effective bandpass curves (122b) of the bandpass filters (22) of all the filter groups (22a, 22b) except one filter group (22a, 22b) so that the effective bandpass curves (122a, 122b) of all the bandpass filters (22) have different spectral positions,
wherein the half-widths and spectral distances of the bandpass curves (122) of the bandpass filters (22) of each filter group (22a, 22b) are configured so that transmission gaps remain between the bandpass curves (122),
wherein the optical means (30) comprise an optically transparent, optical deflector element (30) connected upstream of the bandpass filters (22), and having a number of portions (31, 32) corresponding to the number of filter groups (22a, 22b), wherein each portion (31, 32) of the deflector element (30) is assigned to the bandpass filters of one of the filter groups (22a, 22b) and the measurement light (ML) is deflected by a different angle of deflection, and
wherein the portions (31, 32) comprise a plane parallel portion (31) and at least one prismatic portion (32) or an appropriate prismatic Fresnel structure (32c).

2. A transducer according to Claim 1,
**characterised in that** the widths of the transmission gaps essentially correspond to a multiple of the sought spectral resolution corresponding to the number of filter groups (22a, 22b).

3. A transducer according to Claim 2,
**characterised in that** the angles of deflection of the deflector element (30) are selected so that the effective bandpass curves (122) of the bandpass filters (22) are shifted essentially equidistantly into the transmission gaps.

4. A transducer according to Claim 2 or 3,
**characterised in that** the optical deflector element (30) is disposed directly on or at a short distance from the filter support (21).

5. A transducer according to one of Claims 2 to 4,
**characterised in that** the optical deflector element (30) comprises two prismatic portions (32, 32') for each angle of deflection, which deflect the measurement light (ML) by the same angle in two spatial directions orthogonal to one another.

6. A transducer according to one of Claims 2 to 5,
**characterised in that** the optical deflector element (30) is made from optically transparent plastic.

7. A transducer according to one of the preceding Claims,
**characterised in that** the dielectric interference bandpass filters (22) are lithographically applied to the filter support (21) using thin film coating technology.

## Revendications

1. Transducteur photoélectrique spectral avec un champ (10) d'éléments photoélectriques de transducteur et des filtres passe-bande (22) à interférence diélectriques disposés en amont de ceux-ci sur un support de filtre (21) commun pour la sensibilisation des éléments de transducteur à différentes plages de longueurs d'onde de la lumière de mesure (ML), **caractérisé en ce que** les filtres passe-bande (22) sont incorporés dans un certain nombre de groupes de filtres (22a, 22b) qui contiennent chacun les mêmes filtres passe-bande (22), différents à l'intérieur du groupe de filtres (22a, 22b), **en ce que** des moyens optiques (30) sont prévus, lesquels décalent spectralement les courbes de transmission effectives (122b) de tous les filtres passe-bande (22) de tous les groupes de filtres (22a, 22b) à l'exception d'un groupe de filtres (22a, 22b), de telle manière que les courbes de transmission effectives (122b) de tous les filtres passe-bande (22) présentent des positions spectrales différentes,
les demis largeurs de raies spectrales et les distances spectrales des courbes de transmission (122) des filtres passe-bande (22) de chaque groupe de filtres (22a, 22b) étant dimensionnées de telle manière que des lacunes de transmission demeurent entre les courbes de transmission (122),
les moyens optiques (30) comprenant un élément optique déflecteur (30) optiquement transparent disposé en amont des filtres passe-bande (22) avec un nombre de segments (31, 32) correspondant au nombre de groupes de filtres (22a, 22b), chaque segment (31, 32) de l'élément déflecteur (30) étant affecté aux filtres passe-bande d'un des groupes de filtre (22a, 22b), et déviant la lumière de mesure (ML) sous un autre angle de déflexion, et
les segment (31, 32) comprenant un segment à plans parallèles (31) et au moins un segment prismatique (32) ou une structure prismatique de Fresnel (32c) correspondante.

2. Transducteur selon la revendication 1, **caractérisé en ce que** les largeurs des lacunes de transmission correspondent sensiblement à un multiple de la résolution spectrale souhaitée correspondant au nombre de groupes de filtres (22a, 22b).

3. Transducteur selon la revendication 2, **caractérisé en ce que** les angles de déflexion de l'élément déflecteur (30) sont choisis de telle manière que les courbes de transmission effectives (122) des filtres passe-bande (22) soient décalées sensiblement du même intervalle dans les lacunes de transmission.

4. Transducteur selon la revendication 2 ou 3, **caractérisé en ce que** l'élément optique déflecteur (30) est disposé directement contre le support de filtre (21) ou légèrement espacé de celui-ci.

5. Transducteur selon l'une des revendications 2 à 4, **caractérisé en ce que** l'élément optique déflecteur (30) comporte deux segments prismatiques (32, 32') par angle de déflexion, lesquels dévient la lumière de mesure sous le même angle dans deux directions spatiales orthogonales l'une à l'autre.

6. Transducteur selon l'une des revendications 2 à 5, **caractérisé en ce que** l'élément optique déflecteur (30) est en matière synthétique optiquement transparente.

7. Transducteur selon l'une des revendications précédentes, **caractérisé en ce que** les filtres passe-bande (22) à interférence diélectriques sont appliqués lithographiquement contre le support de filtre (21), par technique de revêtement en couche mince.
